# EUROPEAN PATENT SPECIFICATION

(11) **EP 3 745 839 B1**
(45) Date of publication and mention of the grant of the patent: **31.08.2022**
(21) Application number: 19708158.1
(22) Date of filing: 30.01.2019
(51) Int. Cl.: A01C 7/20

(54) **SOWING MACHINE**
SÄMASCHINE
SEMOIR

(30) Priority: 31.01.2018 IT 201800002284
(43) Date of publication of application: 09.12.2020
(73) Proprietor: Maschio Gaspardo S.p.A., 35011 Campodarsego (PD) (IT)
(72) Inventor: GIAVEDONI, Andrea, 33030 Camino al Tagliamento (UD) (IT); BERT, Roberto, 33075 Morsano al Tagliamento (UD) (IT)
(74) Representative: Locas, Davide
(86) International application number: PCT/IB2019/050753
(87) International publication number: WO 2019/150279

(56) References cited:
- EP-A1- 3 228 170
- WO-A1-2011/119093
- AU-A4- 2009 100 124
- US-B2- 9 832 924

## Description

The invention relates to a sowing element for precision type agricultural sowing machines.

In the technical field of precision type agricultural sowing machines, which are generally used for single-grain sowing, it is known to mount a plurality of sowing elements on an element-carrying bar in order to constitute a multi-row agricultural sowing machine.

The attachment with which the sowing elements are secured to the element-carrying bar comprises a first portion which carries a clamping member, which can slide along the bar where applicable, and a second portion which constitutes a side of an articulated parallelogram type mechanism with which the sowing element is pulled by the bar with the capacity for following the profile of the sowing ground.

In order to remove the sowing element from the bar, it is necessary to open the jaws of the clamping member so as to be able to disengage it completely from the bar.

This operation involves a number of disadvantages, including the need to manoeuvre sowing elements which are relatively heavy in order to disengage the clamping members with the additional problem of the small parts necessary for the engagement possibly falling, such as screws, bolts, pins and the like.

It is clear that this operation, in addition to being laborious, involves the possibility of losing the above-mentioned small parts on the ground.

AU2009/100124 describes a rapid engagement system for unitary elements of a cultivator with an element-carrying bar. This involves a pivotable arm type system with a spring-mounted damper which keeps it pressed on the ground. The system can be disengaged and re-engaged in an easier manner using a tool-carrying bar but cannot be practically used in an agricultural sowing machine in which the sowing elements have to be connected to the element-carrying bar by means of a mechanism which allows the movement upwards and downwards of the element while keeping it parallel therewith, as typically occurs in an articulated parallelogram type system. Furthermore, the system described provides for a rotatable connection about a vertical axis so as to produce a possible horizontal swinging of the element which is carried, which is unsuitable for an agricultural sowing machine.

EP3228170 describes a device which forms a side of an articulated parallelogram for supporting a sowing element of a sowing machine. This side comprises two portions which are assembled together in an adjustable manner by means of screws and bolts in order to block the sowing element along a beam of the frame of the sowing machine in order to facilitate the positioning of the element along the beam. This device is subject to the disadvantages mentioned in the introduction.

Other devices are described in WO2011/119093 and US9832924.

The object of the invention is to facilitate the disassembly and the re-assembly of the sowing elements on/from the element-carrying bar of the sowing machine, overcoming the disadvantages set out with reference to the cited prior art.

This object is achieved by the invention by the appended claims.

The features and advantages of the invention will be better understood from the following detailed description of a preferred embodiment thereof which is illustrated by way of non-limiting example with reference to the following Figures. In the drawings:

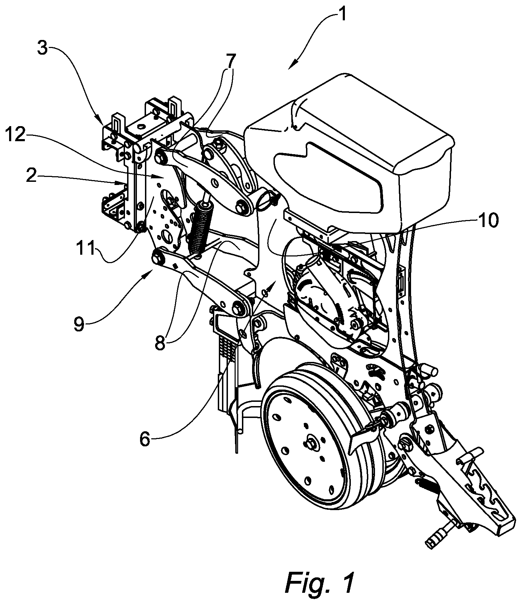

- Figure 1 is a perspective view of a sowing element with an attachment element to an element-carrying bar according to the invention;

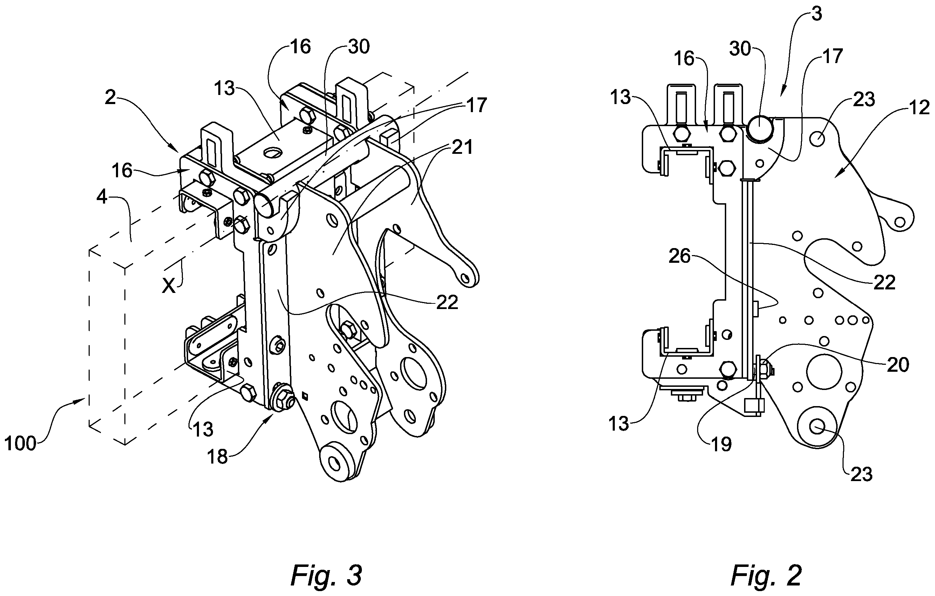

- Figures 2 and 3 are a side view and a perspective view, respectively, of the attachment element of the sowing element of Figure 1;

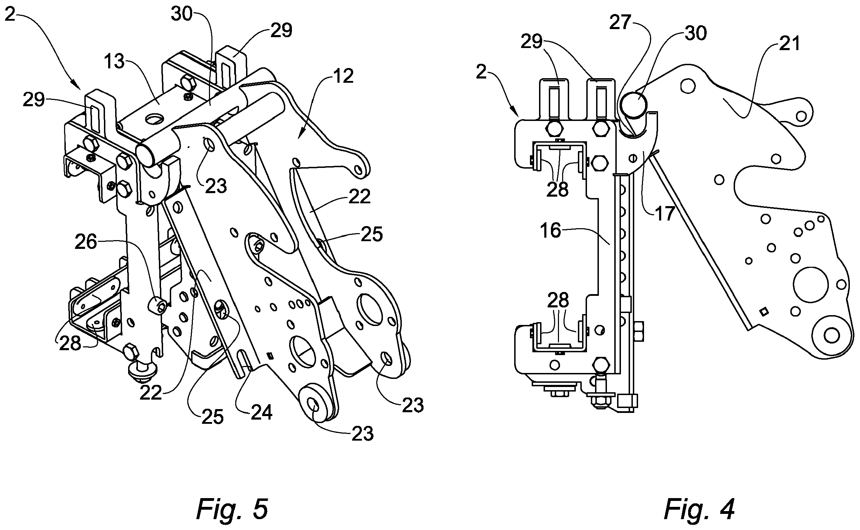

- Figures 4 and 5 are views corresponding to those of Figures 2 and 3 of the same attachment element in the engaging/disengaging step.

In the Figures, there is generally designated 1 a sowing element of a precision type agricultural sowing machine which is generally designated 100. Preferably, a plurality of sowing elements 1 are engaged by means of a respective (rapid) attachment element 3 in a sliding or fixed manner on an element-carrying bar 4 of the sowing machine 100.

Preferably, the above-mentioned engagement can slide for the provision of runners 28 and pulling members 29 involving a sowing element 1 which is intended for a sowing machine 100, the bar 4 of which is foldable for transport on roads, but it is evident to a person skilled in the art that the same concept of engagement can be adapted to sowing elements which are mounted in a fixed manner on the element-carrying bar.

The sowing element 1 comprises a frame 6, to which there are articulated with a respective end thereof two pairs of arms, upper arms 7 and lower arms 8, respectively, of an articulated parallelogram type mechanism which is generally designated 9, the opposite sides designated 10 and 11, respectively, of which are preferably constituted by a portion of the frame 6 and by a second portion 12 of the attachment element 3.

According to the invention, the first portion 2 of the attachment element 3 is the one with which the attachment element is engaged with the element-carrying bar 4 and remains mounted in a stable manner on this bar even when the sowing elements 1 are removed therefrom. The second portion 12 of the attachment element 3 is removably connected to the first portion 2 by means of a rapid engagement mechanism.

This first portion 2 comprises two opposing channels 13 which face each other and which are connected by uprights 16 so as to generally form a seat for receiving the bar 4, with a general formation which is preferably similar to an inverted C.

At the longitudinally opposite ends of the uprights 16, there are formed a pair of hooks 17 and a fixing device 18 with one or two rods 19, respectively, which are preferably screw type rods and which can be oscillated on the respective upright 16 and clamping member 20 (in particular, a clamping nut 20) which is partially screwed onto the shank of the rod 19. In this manner, the movable portions of the fixing device 18 are secured in a loss prevented manner on the first portion 2 of the attachment element 3.

The pair of hooks 17 defines a cradle 27 which is open upwards and which is intended to receive in a removable manner a pin 30 which is fixed to the second portion 12 of the attachment element 3.

More generally, one of the portions 2, 12 of the attachment element 3 has a cradle 27 while the other portion has the pin 30 which is capable of being received in an oscillating manner in the cradle 27. Preferably, the rapid engagement mechanism comprises the cradle 27 and the pin 30 mentioned above. The rapid engagement mechanism may further comprise the fixing device 18.

The pin 30 is fixed between two plates 21 of the second portion 12, each being provided with a wing 22 which, with the attachment element 3 assembled, is arranged behind the respective upright of the first portion 2.

Preferably, the two plates 21 are provided with hinging holes 23 for the respective ends of the arms 7, 8 of the parallelogram type mechanism 9, therefore constituting a side of the above-mentioned mechanism 9.

The two wings 22 are provided, at the opposite side to the pin 30, with a respective slot 24 and, in an intermediate portion between the pin 30 and slot 24, with a hole 25, in which there is received the head 26 of a centring pin which is provided in a corresponding position on the first portion of the attachment element 3.

The slots 24 supplement the fixing device 18 by receiving the rod 19 of the first portion in order to prevent the relative oscillation between the portions 2, 12 once they are coupled about the X axis of the cradle 17.

The holes 25 and the heads 26 of the pins constitute in turn engagement means and engagement counter-means in order to prevent relative sliding between the portions 2, 12 once engaged with each other.

In order to rapidly engage a sowing element 1 with the element-carrying bar 4, it is simply necessary to lift it, arrange it with the pin 30 in the cradle 27 which is defined by the hooks 17 and allow it to be arranged by means of gravitational force with the wings 22 placed against the uprights 16.

Then, there is carried out the engagement of the screw type rod 19 in the respective slot 24 and the tightening of the nut 20 so as to block the assembly. The disengagement is brought about just as rapidly by following the same operations in reverse.

If necessary, it is possible to connect the optional rods which are provided for sliding the sowing elements 1 along the sowing bar 4.

The main advantage of the invention is making the assembly and disassembly of the sowing elements with respect to the element carrying bar of the sowing machine extremely easy and rapid. In addition to being fast, this operation is particularly easy as a result of the simplicity of the rapid attachments used. Furthermore, the connection is secure both as a result of the fact that it benefits from gravitational force in order to keep the attachment closed and as a result of the fact that the portions subjected to possible loss are carried at the attachment side which remains fixed to the bar and therefore cannot be lost.

## Claims

1. A sowing element (1) for precision type agricultural sowing machines comprising a frame (6), an articulated parallelogram type mechanism (9), the articulated parallelogram type mechanism (9) including a pair of upper arms (7) and a pair of lower arms (8) and opposite sides (10, 11), and wherein respective ends of said pair of upper arms (7) and said pair of lower arms (8) are articulated to the frame (6), the sowing element (1) further comprising an attachment element (3) with which one of said sides of the articulated parallelogram type mechanism (9) can be engaged with an element-carrying bar (4) of an agricultural precision type sowing machine (100), the attachment element (3) comprising a first portion (2) which is configured to be engaged on the element-carrying bar (4) and a second portion (12) which is fixedly joined to said side of the articulated parallelogram type mechanism (9), or is integral with said side, **characterized in that** the second portion (12) is removably connected to the first portion (2) by means of a rapid engagement mechanism, wherein the first portion of the attachment element (3) is configured to remain mounted in a stable manner on the element-carrying bar (4) when the sowing element (1) is removed therefrom.

2. The sowing element (1) according to claim 1, wherein one of the portions (2, 12) has a cradle (27) and the other of the portions (2, 12) has a pin (30) which is capable of being received in an oscillating manner in the cradle (27).

3. The sowing element (1) according to claim 2, wherein there is provided on the portions (2, 12) in respective distal positions with respect to the pin and cradle (30, 27) a fixing device (18) between the portions in order to prevent the oscillation of one portion (2) with respect to the other portion (12) relative to the axis (X) of the pin (30) and cradle (27).

4. The sowing element (1) according to one or more of the preceding claims, wherein the portions (2, 12) are provided with respective engagement means and engagement counter-means (25, 26) in order to prevent relative sliding between the portions (2, 12) once engaged with each other.

5. The sowing element (1) according to claim 2 or 3, or to claim 4 when dependent on claim 2, comprising two parallel plates (21) which are spaced apart and which have respective hinging holes (23) for an end of the arms (7, 8) of the articulated parallelogram type mechanism (9), the pin (30) being fixedly joined between the plates (21).

6. The sowing element (1) according to claim 3, or to either claim 4 or 5, when dependent on claim 3, wherein the fixing device (18) comprises a rod (19), preferably a screw type rod, and a relevant clamping member (20) which are mounted in an oscillating and loss prevented manner on the first portion (2).

7. The sowing element (1) according to one or more of the preceding claims, wherein the first portion (2) is provided with sliding runners (28) in order to move in translation in a controlled manner along the element-carrying bar (4).

8. A precision type agricultural sowing machine (100) including a plurality of sowing elements (1) according to any of one or more of the preceding claims.

## Patentansprüche

1. Säelement (1) für landwirtschaftliche Präzisionssämaschinen mit einem Rahmen (6), einem gelenkigen parallelogrammartigen Mechanismus (9), wobei der gelenkige parallelogrammartige Mechanismus (9) ein Paar obere Arme (7) und ein Paar untere Arme (8) und gegenüberliegende Seiten (10, 11) umfasst, und wobei jeweilige Enden des Paars oberer Arme (7) und des Paars unterer Arme (8) gelenkig mit dem Rahmen (6) verbunden sind, wobei das Säelement (1) ferner ein Befestigungselement (3) aufweist, mit dem eine der Seiten des gelenkigen parallelogrammartigen Mechanismus (9) mit einer elementtragenden Stange (4) einer landwirtschaftlichen Präzisionssämaschine (100) in Eingriff stehen kann, wobei das Befestigungselement (3) einen ersten Abschnitt (2) aufweist, der eingerichtet ist, um mit der elementtragenden Stange (4) in Eingriff zu stehen, und einen zweiten Abschnitt (12) aufweist, der fest mit der Seite des gelenkigen parallelogrammartigen Mechanismus (9) verbunden ist oder einstückig mit der Seite ist, **dadurch gekennzeichnet, dass** der zweite Abschnitt (12) lösbar mit dem ersten Abschnitt (2) mittels eines Schnelleingriffsmechanismus verbunden ist, wobei der erste Abschnitt des Befestigungselements (3) eingerichtet ist, um in stabiler Weise an der elementtragenden Stange (4) montiert zu bleiben, wenn das Säelement (1) davon entfernt wird.

2. Säelement (1) nach Anspruch 1, wobei einer der Abschnitte (2, 12) eine Aufnahme (27) und der andere der Abschnitte (2, 12) einen Stift (30) aufweist, der in der Lage ist, um in der Aufnahme (27) oszillierend aufgenommen zu werden.

3. Säelement (1) nach Anspruch 2, wobei an den Abschnitten (2, 12) in jeweiligen distalen Positionen in Bezug auf den Stift und die Aufnahme (30, 27) eine Befestigungsvorrichtung (18) zwischen den Abschnitten vorgesehen ist, um die Oszillation eines Abschnitts (2) in Bezug auf den anderen Abschnitt (12) relativ zur Achse (X) des Stifts (30) und der Aufnahme (27) zu verhindern.

4. Säelement (1) nach einem oder mehreren der vorhergehenden Ansprüche, wobei die Abschnitte (2, 12) mit jeweiligen Eingriffsmitteln und Eingriffsgegenmitteln (25, 26) versehen sind, um ein relatives Gleiten zwischen den Abschnitten (2, 12) zu verhindern, sobald sie miteinander in Eingriff sind.

5. Säelement (1) nach Anspruch 2 oder 3 oder nach Anspruch 4, wenn von Anspruch 2 abhängig, das zwei parallele Platten (21) aufweist, die voneinander beabstandet sind und die jeweiligen Scharnierlöcher (23) für ein Ende der Arme (7, 8) des gelenkigen parallelogrammartigen Mechanismus (9) aufweisen, wobei der Stift (30) fest mit den Platten (21) verbunden ist.

6. Säelement (1) nach Anspruch 3 oder Anspruch 4 oder 5, wenn von Anspruch 3 abhängig, wobei die Befestigungsvorrichtung (18) eine Stange (19), vorzugsweise eine schraubenartige Stange, und ein entsprechendes Klemmelement (20) aufweist, die oszillierend und verliersicher am ersten Abschnitt (2) montiert sind.

7. Säelement (1) nach einem oder mehreren der vorhergehenden Ansprüche, wobei der erste Abschnitt (2) mit Gleitkufen (28) versehen ist, um eine gesteuerte Translationsbewegung entlang der elementtragenden Stange (4) auszuführen.

8. Landwirtschaftliche Präzisionssämaschine (100) mit einer Mehrzahl von Säelementen (1) nach einem oder mehreren der vorhergehenden Ansprüche.

## Revendications

1. Élément d'ensemencement (1) pour semoirs agricoles de type précision comprenant un châssis (6), un mécanisme de type parallélogramme articulé (9), le mécanisme de type parallélogramme articulé (9) comportant une paire de bras supérieurs (7) et une paire de bras inférieurs (8) et des côtés opposés (10, 11), et dans lequel des extrémités respectives de ladite paire de bras supérieurs (7) et de ladite paire de bras inférieurs (8) s'articulent sur le châssis (6), l'élément d'ensemencement (1) comprenant en outre un élément d'attache (3) avec lequel un desdits côtés du mécanisme de type parallélogramme articulé (9) peut venir en prise avec une barre de support d'élément (4) d'un semoir agricole de type précision (100), l'élément d'attache (3) comprenant une première partie (2) qui est conçue pour venir en prise sur la barre de support d'élément (4) et une seconde partie (12) qui est reliée fixement audit côté du mécanisme de type parallélogramme articulé (9), ou est d'une seule pièce avec ledit côté, **caractérisé en ce que** la seconde partie (12) est raccordée de manière amovible à la première partie (2) au moyen d'un mécanisme de mise en prise rapide, dans lequel la première partie de l'élément d'attache (3) est conçue pour rester montée de manière stable sur la barre de support d'élément (4) lorsque l'élément d'ensemencement (1) en est retiré.

2. Élément d'ensemencement (1) selon la revendication 1, dans lequel une des parties (2, 12) possède un berceau (27) et l'autre des parties (2, 12) possède une broche (30) qui est capable d'être reçue de manière oscillante dans le berceau (27).

3. Élément d'ensemencement (1) selon la revendication 2, dans lequel il est prévu, sur les parties (2, 12) dans des positions distales respectives par rapport aux broche et berceau (30, 27), un dispositif de fixation (18) entre les parties afin d'empêcher l'oscillation d'une partie (2) par rapport à l'autre partie (12) selon l'axe (X) de la broche (30) et du berceau (27).

4. Élément d'ensemencement (1) selon une ou plusieurs des revendications précédentes, dans lequel les parties (2, 12) sont pourvues d'un moyen de mise en prise et d'un contre-moyen de mise en prise (25, 26) respectifs afin d'empêcher un coulissement relatif entre les parties (2, 12) une fois en prise mutuelle.

5. Élément d'ensemencement (1) selon la revendication 2 ou 3, ou la revendication 4 lorsqu'elle dépend de la revendication 2, comprenant deux plaques parallèles (21) qui sont espacées et qui possèdent des trous de charnière (23) respectifs pour une extrémité des bras (7, 8) du mécanisme de type parallélogramme articulé (9), la broche (30) étant reliée fixement entre les plaques (21).

6. Élément d'ensemencement (1) selon la revendication 3, ou soit la revendication 4 ou 5, lorsqu'elles dépendent de la revendication 3, dans lequel le dispositif de fixation (18) comprend une tige (19), de préférence une tige de type vis, et un organe de serrage (20) adéquat qui sont montés sur la première partie (2) de manière oscillante et évitant une perte.

7. Élément d'ensemencement (1) selon une ou plusieurs des revendications précédentes, dans lequel la première partie (2) est pourvue de patins de coulissement (28) afin de se déplacer en translation d'une manière commandée le long de la barre de support d'élément (4).

8. Semoir agricole de type précision (100) comprenant une pluralité d'éléments d'ensemencement (1) selon l'une ou plusieurs quelconques des revendications précédentes.
